# EUROPÄISCHE PATENTANMELDUNG

(11) **EP 1 457 110 A1**
(43) Veröffentlichungstag der Anmeldung: **15.09.2004**
(21) Anmeldenummer: 04005808.3
(22) Anmeldetag: 11.03.2004
(51) Int. Cl.: A01L 13/00, A01K 1/06

(54) **Universell einsetzbarer Huf- und Klauenpflegestand**

(30) Priorität: 13.03.2003 AT 1742003 U
(71) Anmelder: Gangl, Johann, 8162 Passail (AT)
(72) Erfinder: Gangl, Johann, 8162 Passail (AT)

(57) **Zusammenfassung**

Huf- und Klauenpflegestand zur universellen Einsetzbarkeit, wie bei Huf- bzw. Klauenbeschneidungen, operativen Behandlungen, als Wiegestand und elektronischer Datenerfassung von tierischen Paar- oder Einhufern, wonach an dem vorderen und hinterem Steherrahmen (9,16) ausziehbare, ausschwenkbare bzw. abklappbare Auslegearme (20,29) befestigt sind, wobei an diesen Auslegearmen (20,29) Hubzylinder angeordnet sind, welche sich unterteilen in Niveauausgleichszylinder (1,22) und Arbeitszylinder (3,19), und dazwischenliegend die Wiegezellen (2,21) für das Abwiegen des Tieres, und dass zur seitlichen variablen Fixiereinrichtung des Tieres Flankenbügel (13) vorgesehen sind und zur Fußaufhebung eine seitlich variabel verstellbares glockenförmiges Fühnmgsrohr (5,26) als Bestandteil einer elektrischen Seilwinde (8,27) gegeben ist.

## Beschreibung

Die vorliegende Erfindung betrifft einen universell einsetzbaren Huf- und Klauenpflegestand zur Beschneidung von tierischen Paar- oder Einhufer, zu operativen Behandlungen, als auch als Wiegestand und zur elektronischen Datenerfassung der Tiere.

Bisher liegen zwei nennenswerte Arten von Klauenpflegeständen vor.
Bei der ersten Art wird das Tier an einem einfachen Rahmen angegurtet und mitsamt dem Rahmen auf die Seite gekippt. Dadurch ist ein großer Arbeitsaufwand für den Klauenpfleger, sowie eine ausgesprochen schlechte Körperhaltung und auch eine schlechte Übersicht für das Beschneiden der Klauen gegeben. Für die Tiere ist außerdem hierbei eine große Stressbelastung gegeben, die bekanntlich in einigen Fällen bis zum Tod geführt hat.
Bei der zweiten Art handelt es sich um einen auf den Boden aufgesetzten Klauenpflegestand, der keine guten Arbeitsbedingungen für den Klauenpfleger aufweist, Arbeitsbedingungen wie gekrümmte Körperhaltung, weiteres große Verletzungsgefahr beim Ausschlagen des Tieres beim Beschneiden der Klauen, sowie durch den tiefen Arbeitsbereich eine schlechte Übersicht beim Beschneiden der Klauen.

Die Aufgabe der vorliegendenden Erfindung war es nun, diese Nachteile bei den zur Verfügung stehenden Geräten zu beseitigen und dem Klauenpfleger ein geeignetes Gerät mit leichterer Handhabung und besserer Arbeitsbedingungen beizustellen.

Gelöst wird diese Aufgabe durch die, bei den Ansprüchen 1 bis 3 gekennzeichneten Merkmalen.

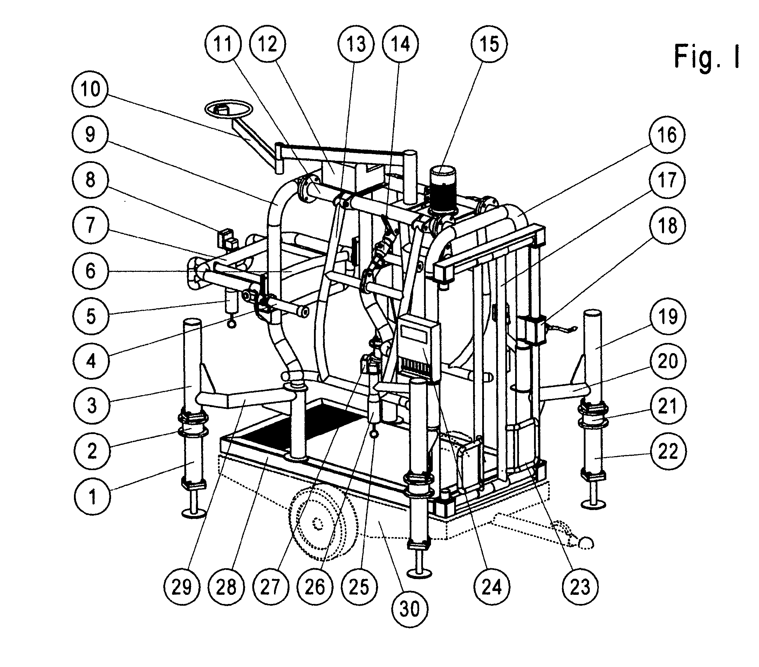

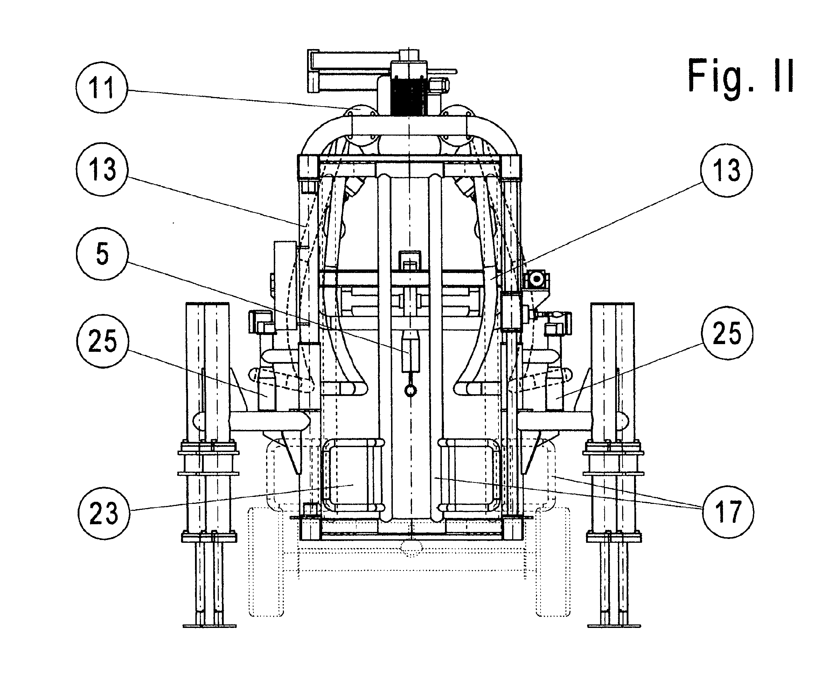

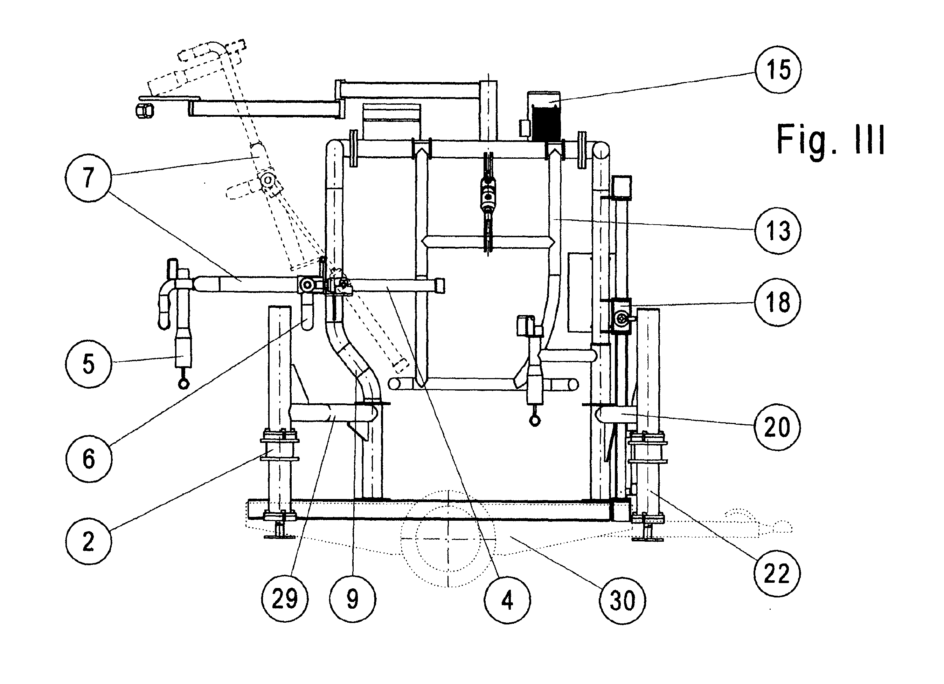

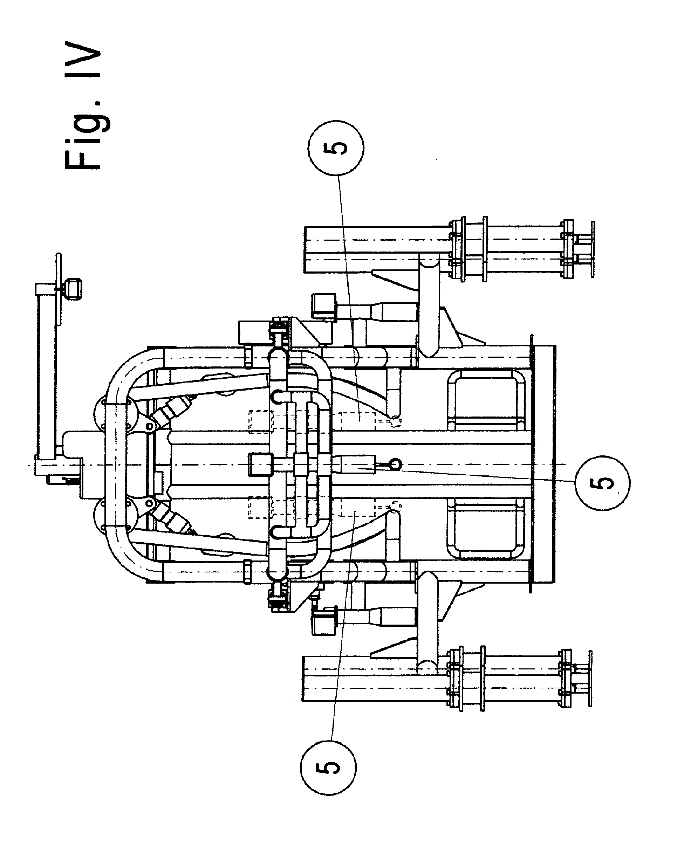

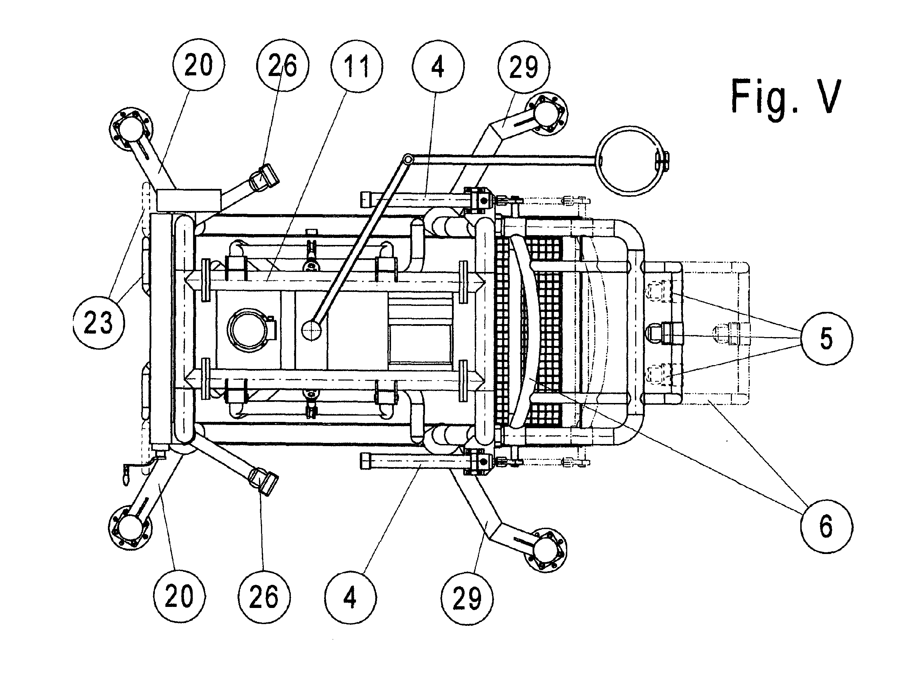

Da das Gerät mit einer Hydraulikpumpe ausgestattet ist, die von einem Elektrikmotor (15) oder auch Akku angetrieben wird, ergibt sich die Möglichkeit einer problemlosen Steuerung der Maschine. Zugleich ergibt sich ein großer Vorteil daraus, dass man unabhängig von einer Zugmaschine ist, wie z.B. Traktor, LKW oder ähnliches. In unserem Fall kommt ein PKW zum Einsatz, somit kann man zeitsparend weite Strecken zurücklegen (ein Vorteil für Berufsklauenschneider). Beim Auf- und Abladen vom Transportwagen (30) kommen an den hinteren (9) und vorderen (16) Steherrahmen befestigte ausschwenkbare Arme (29,20) zum Einsatz. An diesen insgesamt vier ausschwenkbaren, ausklappbaren bzw. ausziehbaren Armen (29, 20) sind jeweils Hubzylinder angebracht, welche unterteilt sind in einen Niveauausgleichszylinder (1,22), eine Wiegezelle (2, 21) und in einem Arbeitshubzylinder (3, 19). Daher ist eine große Standfestigkeit der Maschine gegeben. Nachdem die Zylinder ausgefahren sind, kann man problemlos das Anhängergestell (30), worauf das Arbeitsgerät transportiert wird, wegstellen. Beim Absenken des Standes, geht es in die Grundstellung (Figur 4), dabei kann man es danach auf jede Bodenbeschaffenheit horizontal einstellen (Unebenheit, Hangneigung). Für diese Einstellung werden die Niveauausgleichszylinder (1, 22) zum Einsatz gebracht.

Das Klauenschneidegerät wird vorne (23) und hinten (7) geöffnet und die Tiere können nun mühelos eingetrieben werden, entweder zum Klauenbeschneiden oder Operieren oder zur Abwiege, wobei bei der Abwiege die Wiegezellen (2, 21) über die elektronische Datenerfassung (24) gekoppelt sind.

Nachdem das Tier in den Rahmen getrieben bzw. geführt wurde, wird das Tier mittels senkrechten Rohstäben (17) beim Kopf fixiert. Durch die senkrechten Rohrstäbe (17) kann sich der Kopf des Tieres nach oben und unten frei bewegen und es ist keine Erwürgungsgefahr für das Tier gegeben. Durch die zusätzliche hintere Fixierung (7) mittels eines auf die Länge verstellbaren Querbalken (6) ist die Beweglichkeit des Tieres soweit eingeengt, dass eine Verletzungsgefahr für den Klauenpfleger nicht mehr gegeben ist. Nach Einengung der rechten und linken Bauchflanken mittels der rechten und linken Flankenbügel (13) ist das Tier ruhig gestellt. Die Flankenflügeln (13) werden mittels Hubzylinder (14) betätigt. Dabei steht das Tier völlig frei auf seinen Beinen. Gefahrenquellen wie z.B. Ausschlagen des Tieres sind daher nicht mehr gegeben. Für die Beseitigung dieser Gefahrenquellen trägt auch die gekröpfte Anordnung der hinteren, schon an sich nach vorne gekröpft versetzten Steherrahmen (9) weitgehend bei.

Äußerst vorteilhaft ist der Auslegearm (10), da einerseits durch die Anordnung von elektrischen Anschlüssen und andererseits durch die angebrachte Anhängevorrichtung eine geordnete und den Sicherheitsbestimmungen entsprechende Verwahrung der Arbeitsgeräte, wie Fräsmaschinen und Schleifgeräte, während des Arbeitens gegeben ist.

Die zu beschneidenden Extremitäten werden mittels der Fußwinden (27, 8), die aufgrund Ihrer Form als Glocke bezeichnet werden, mit einem Seil hochgezogen, wobei eine gepolsterte Schlaufe am Unterfuß des Tieres, und zwar zwischen Hauptmittelfuß und Fesselbein, befestigt wird. Das Seil wird mit der Schlaufe (Haken) in Verbindung gebracht. Die Winden (27, 8) werden elektrisch oder mit Ölpumpe angetrieben und der Fuß wird bis zum unteren Anschlag der Glocke hochgezogen. Die Glocke (5,26) ist in jede Richtung verstellbar und schwenkbar, und ergibt für den Klauenpfleger optimale Arbeitsbedingungen. Nach dem Beenden der Behandlung oder Beschneidung wird der Stand wieder mit dem Tier zu Boden gefahren, vorne werden die Rohstäbe (17) wieder geöffnet und das Tier kann wieder aus dem Stand geführt werden. Die Rohrstäbe (17) werden mittels Kurbelgetriebe (18) geöffnet. Nach Abschluss der Arbeiten, wird der Huf- und Klauenpflegestand mittels der Desinfektionsanlage (12) gereinigt.

Das anmeldungsgemäße Gerät zeichnet sich durch folgende Vorteile aus:
1. Für jede Bodenbeschaffenheit horizontal leicht einstellbar.
2. Leichte Transportierbarkeit auch über weite Strecken.
3. Durch die Standbreite keine Kippgefahr. Dadurch für Kühe und Bullen geeignet.
4. Keine Stressbelastung für das Tier, da es die normale Körperhaltung beibehält.
5. Wird gleichzeitig als Wiegestand und zur Tier-Datenerfassung eingesetzt.

Ein ganz wichtiger und wesentlicher Teil dieses Gerätes liegt darin, dass durch die individuelle Einstellbarkeit man den Klauenstand samt dem Tier hochfahren kann, so dass optimale Arbeitsbedingungen gegeben sind. Dieses Hochfahren erfolgt mit dem Hubzylindern, die mit der Hydrauliksteuerung (24) betätigt werden. Damit sind nun mit dem anmeldungsgemäßen Gerät besonders günstige Arbeitsbedingungen gegeben und zwar keine gekrümmte Arbeitshaltung mehr und eine optimale Sicht auf die Hufe oder Klauen der Tiere.

### Bezugszeichen der Zeichnungen

(1) Hinterer Hydraulikzylinder für Niveauausgleich
(2) Hintere Wiegezelle
(3) Hydraulikzylinder für Arbeitshub
(4) Hydraulikzylinder für hinteren Verschlussrahmen
(5) Hintere seitlich verstellbare Glocke (Fußwinde)
(6) Längsvariabler hinterer schwenkbarer Querbalken
(7) Hinterer Verschlussrahmen
(8) Elektrische Seilwinde
(9) Rückwärtiger gekröpfter Steherrahmen
(10) Auslegearm für Arbeitsmaschinen
(11) Oberer Seitenrahmen mit integriertem Öltank
(12) Desinfektionsgerät
(13) Rechter und linker Flankenbügel
(14) Hydraulikzylinder für Flankeneinstellung
(15) Elektromotor mit Hydraulikpumpe
(16) Vorderer Steherrahmen
(17) Vorderer Hals-/Fixiervorrichtung
(18) Kurbelgetriebe
(19) Vorderhydraulikzylinder für Arbeitshub
(20) Vordere schwenkbare Auslegearme
(21) Vordere Wiegezellen
(22) Vorderer Hydraulikzylinder für Niveauausgleich
(23) Austrittschutzrahmen
(24) Hydrauliksteuerung mit elektronischer Datenerfassung
(25) Vorderes Seil mit Ring für Fußwinde
(26) Vordere Glocke
(27) Elektrische Seilwinden
(28) Grundrahmen
(29) Hintere schwenkbare Auslegearme
(30) Transportwagen

## Patentansprüche

1. Huf- und Klauenpflegestand zur universellen Einsetzbarkeit, wie bei Huf- bzw. Klauenbeschneidungen, operativen Behandlungen, als Wiegestand und elektronischer Datenerfassung von tierischen Paar- oder Einhufern, **dadurch gekennzeichnet, dass** an dem vorderen und hinterem Steherrahmen (9,16) ausziehbare, ausschwenkbare bzw. abklappbare Auslegearme (20,29) befestigt sind, wobei an diesen Auslegearmen (20,29) Hubzylinder angeordnet sind, welche sich unterteilen in Niveauausgleichszylinder (1,22) und Arbeitszylinder (3,19), und dazwischenliegend die Wiegezellen (2,21) für das Abwiegen des Tieres, und dass zur seitlichen variablen Fixiereinrichtung des Tieres Flankenbügel (13) vorgesehen sind und zur Fußaufhebung eine seitlich variabel verstellbares glockenförmiges Führungsrohr (5,26) als Bestandteil einer elektrischen Seilwinde (8,27) gegeben ist.

2. Pflegestand nach Anspruch 1, **dadurch gekennzeichnet, dass** der Steherrahmen (9) gekröpft nach vorne versetzt ist.

3. Pflegestand nach den Ansprüchen 1 und 2, **dadurch gekennzeichnet, dass** die Fußaufhebung durch ein Seil (25) erfolgt, welches wiederum mit einer gepolsterten Schlaufe, die um unteren Extremitäten des Tieres geschlungen wird und mittels elektrischer Seilwinde (8,27) bis zum unteren Anschlag des glockenförmigen Führungsrohres (5,26) hochgezogen und fixiert wird.
